## Europäisches Patentamt

## European Patent Office

## Office européen des brevets

(11) Numéro de publication: **0 185 795**
**B1**

(12) ## FASCICULE DE BREVET EUROPÉEN

(45) Date de publication du fascicule du brevet:
**31.05.89**

(51) Int. Cl.⁴: **A 23 C 19/076,** A 23 C 19/028

(21) Numéro de dépôt: **84116296.9**

(22) Date de dépôt: **24.12.84**

(54) **Procédé de fabrication d'un produit laitier.**

(43) Date de publication de la demande:
**02.07.86 Bulletin 86/27**

(45) Mention de la délivrance du brevet:
**31.05.89 Bulletin 89/22**

(84) Etats contractants désignés:
**AT BE CH DE FR GB IT LI LU NL SE**

(56) Documents cité:
**CH-A-623 204**
**DE-C-964 652**
**FR-A-1 241 283**
**FR-A-2 405 655**

(73) Titulaire: **SOCIETE DES PRODUITS NESTLE S.A.,**
**Case postale 353, CH- 1800 Vevey (CH)**

(72) Inventeur: **Prella, Giovanni, Via Agordat 16,**
**I-Vercelli (IT)**

LIBER, STOCKHOLM 1989

## Description

La présente invention concerne un procédé de fabrication d'un produit laitier du genre fromage frais.

Dans la tradition fromagère, on distingue entre plusieurs types de fromages en fonction de leur apparence et de leurs caractères organoleptiques. Un de ces types regroupe les fromages frais ainsi qualifiés du fait qu'ils ressemblent à des caillés laitiers fraîchement égouttés et qu'ils n'ont pas subi d'affinage.

On obtient certains fromages frais, appelés "à pâte lactique" par l'action des ferments lactiques qui, en transformant le lactose en acide lactique, augmentent l'acidité du lait jusqu'à atteindre le pH isoélectrique de la caséine, ce qui provoque sa coagulation. C'est le cas par exemple du Petit Suisse, du Cream Cheese ou du Quark. On fabrique d'autres fromages frais, notamment la Mozzarella, par coagulation du lait à la présure, suivie d'une maturation du caillé par fermentation lactique, de l'égouttage du caillé et du filage de la masse égouttée. D'autres fromages frais enfin, comme le Mascarpone ou la Ricotta, résultent d'une coagulation thermique du lait, de la crème ou du petit-lait à un pH bien déterminé. Les fromages de ce type seront appelés "à pâte douce" dans la suite de l'exposé, par opposition à fromages frais ayant subi une fermentation lactique.

Traditionnellement, la Ricotta est fabriquée à partir de petit-lait de brebis, sous-produit de la fabrication du Pecorino, par coagulation des protéines qu'il contient par la chaleur en milieu légèrement acide. Actuellement, une bonne partie de la Ricotta commercialisée est obtenue par coagulation thermique en présence d'acide d'un mélange de petit-lait, de lait et de crème de vache. Ce produit est très apprécié des consommateurs.

Lors de sa fabrication, on utilise les protéines du petit-lait au lieu de les éliminer sous forme d'effluents, ce qui est très avantageux.

Malheureusement, tous les fromages frais, en raison de leur richesse en eau et de l'absence de croûte sont d'excellents milieux fermentescibles, ce qui explique qu'ils ne puissent habituellement être conservés au-delà de quelques jours.

La Ricotta par exemple, si elle est fabriquée sans précaution hygiénique particulière, doit être consommée dans la semaine qui suit sa fabrication, ce qui limite sa commercialisation. Au-delà, même si elle était distribuée au moyen d'une chaîne du froid, d'habitude autour de 6 - 8° C, certains agents d'altération comme les moisissures et les levures se développant à cette température la rendraient impropre à la consommation.

La pasteurisation de la Ricotta avant le conditionnement n'apporte pas d'amélioration sensible de sa conservation et lui confère une texture plus compacte désagréable. Quant à la stérilisation, elle provoque une destruction de sa texture qui devient sableuse.

On connaît un procédé de fabrication de Cream Cheese décrit dans la demande de brevet français No. 2 405 655, selon lequel on mélange du lait entier, un concentré de protéines de petit-lait et de la crème, on ultrafiltre le mélange, on pasteurise et on homogénéise le rétentat, on y ajoute des ferments lactiques, on le soumet à une fermentation qui provoque sa coagulation, on stabilise le coagulum formé en y ajoutant du chlorure de sodium et une gomme végétale et on l'emballe.

Un tel procédé permet la réalisation d'une crème de fromage fermentée qui est conditionnée après formation du coagulum.

Le procédé selon CH-A-623 204 consiste à préparer un produit de départ de pH 5,9 à 6,2 par acidification, dont la composition est celle du fromage final, à pasteuriser ou à stériliser ce produit, à le conditionner à chaud dans un emballage, à y ajouter des ferments lactiques acidifiants et éventuellement de la présure, à fermer l'emballage hermétiquement et à incuber le produit jusqu'à l'équilibre fermentatif sous l'effet des bactéries acidifiantes, le pH s'abaissant progressivement jusqu'à 4,8 - 4,9, ce qui provoque la coagulation de la caséine. La présure éventuellement ajoutée a un rôle secondaire de modification légère de la texture et du goût. Le produit a un goût acide.

L'invention permet de fabriquer des fromages frais non fermentés, à pâte douce de bonne conservation ayant les qualités organoleptiques très proches du lait et conditionnés avant coagulation.

Elle a trait à un procédé de fabrication d'un produit laitier du genre fromage frais dans lequel on prépare un mélange de départ contenant de la caséine à l'état natif, des matières grasses et des protéines de petit-lait, on stérilise ce mélange et on le conditionne à chaud et de manière hautement hygiénique dans des récipients, on y ajoute un agent de fermentation, on ferme les récipients hermétiquement et on les laisse reposer dans des conditions permettant la coagulation de la caséine sous l'action de l'agent de fermentation, caractérisé par le fait que la caséine à l'état natif est sous forme d'un rétentat d'ultrafiltration de lait plus ou moins écrémé de pH voisin du pH naturel du lait, les protéines de petit-lait sous forme de Ricotta de pH 6,1 - 6,2 et les matières grasses sous forme de crème de pH 6,6 - 6,7 et que l'agent de fermentation est uniquement la présure stérile à l'exclusion des ferments lactiques d'origine bactérienne et de la présure non stérile.

Pour la clarté de l'exposé, on traitera, sous forme de chapitres distincts, successivement la préparation du mélange de départ, le traitement thermique de stérilisation, le conditionnement hautement hygiénique et la coagulation de la caséine. Le qualificatif "hautement hygiénique" désigne des conditions proches de l'aseptie.

## Préparation du mélange de départ

Le mélange de départ est obtenu par apport successif en des proportions convenables de différents composants du lait comme la caséine à l'état natif, la graisse et les protéines de petit-lait (notamment la lactalbumine), le lactose et les sels minéraux.

Le mélange contient de la caséine "à l'état natif". Cela signifie que la majeure partie de la caséine qu'il contient n'est pas dénaturée et donc réagit à la présure.

Cette caséine à l'état natif est apportée sous forme de rétentat obtenu par ultrafiltration de lait plus ou moins écrémé. On peut ultrafiltrer un lait frais, un lait reconstitué à partir d'une poudre par addition d'eau ou un lait recombiné par addition d'eau et de matière grasse lactique anhydre à une poudre. Le rétentat peut être tel quel ou reconstitué à partir d'une poudre par addition d'eau. Lorsqu'on utilise des poudres, celles-ci auront été séchées dans des conditions ménagées pour préserver l'état natif de la caséine. De préférence, le rétentat est obtenu par concentration de lait maigre à un pH voisin du pH naturel du lait, par exemple de 6, 7 et de manière à régler le rapport pondéral lactose/protéines à 0,25 - 0,45. De préférence, la concentration est d'environ 5 fois, jusqu'à environ 12 - 15 % en poids de protéines totales.

Les protéines de petit-lait sont sous forme de Ricotta, c'est-à-dire qu'elles sont insolubilisées par dénaturation thermique et ont été isolées à partir de petit-lait par floculation par la chaleur dans des conditions d'acidité contrôlée. On les obtient par exemple en chauffant un mélange de petit-lait, de lait et/ou de crème à environ 90°C pendant 15 à 30 min, en soutirant le petit-lait déprotéiné, en recueillant les protéines floculées par filtration et en les pressant dans des toiles. La Ricotta obtenue de cette manière a un pH d'environ 6,1 - 6,2.

En variante, la Ricotta peut être obtenue comme indiqué ci-dessus à partir de lait et de petit-lait, éventuellement concentré par ultrafiltration.

La graisse est d'origine lactique. Une partie de celle-ci peut provenir du rétentat de lait et/ou être apportée avec les protéines de petit-lait insolubilisées comme indiqué ci-dessus. Le reste est sous forme de crème, par exemple à 50 % en poids de matière grasse, de pH d'environ 6,6 - 6,7.

Avantageusement, le mélange de départ est constitué en parties pondérales, de 65 - 85 % de lait maigre ultrafiltré, 3 - 15 % de Ricotta et 4 - 30 % de crème.

Les matières premières ci-dessus, de préférence préchauffées, peuvent être mélangées dans une cuve et passées ensuite dans un moulin colloïdal et/ou un homogénéisateur travaillant dans des conditions ménagées, par exemple à une pression inférieure à $4,9 \cdot 10^6$Pa. Le but de cette dernière opération est de microdisperse la Ricotta dans le milieu liquide de manière à la rendre imperceptible dans le mélange final. Si la Ricotta n'est pas dispersée de manière suffisamment homogène, il y a un risque de séparation de particules solides lors du traitement ultérieur de stérilisation, avec apparition d'un goût de brûlé. Une homogénéisation trop poussée conduirait par contre à une texture trop moelleuse du produit fini. De préférence le mélange envoyé à l'homogénéisation doit être pauvre en mousse de manière à ne pas incorporer trop d'air, ce qui aurait également une influence négative sur la texture (trop molle).

On préfère ajouter dans le mélange des agents stabilisants du type des hydrocolloïdes protecteurs rendant le produit fini plus stable en réduisant la quantité de sérum qui pourrait se séparer pendant la commercialisation du produit. On peut ajouter par exemple 0,1 à 0,3 %, en poids du mélange, d'alginate ou de carraghénate.

## Traitement thermique de stérilisation

Ce traitement a pour but de détruire la flore microbienne présente dans le produit de départ, y compris les formes sporulées. Il peut être effectué par tout moyen de stérilisation, par chauffage indirect (échangeur de chaleur à surface raclée ou à plaques) ou direct (injection de vapeur), par exemple par stérilisation UHT (ultra-haute température). La nature et la durée du traitement seront choisies en fonction de la texture désirée du produit fini.

On veillera de préférence à ce que le pH ne soit pas inférieur à 6,6 pour éviter de coaguler ne serait-ce que partiellement les protéines du mélange, notamment la caséine, et préserver sa réactivité à la présure, ceci pour obtenir la texture désirée.

Un taitement stérilisant à 130 - 145°C pendant 8 à 60 s convient.

## Conditionnement hautement hygiénique et addition de l'agent de coagulation

Le produit intermédiaire stérilisé doit être conditionné de façon à ce qu'aucun micro-organisme du milieu environnant ne puisse s'y implanter durablement. Ces conditions peuvent être réunies par remplissage à chaud, par exemple à température de 45 - 55°C dans des emballages thermoformés dans des conditions d'hygiène parfaites. Par exemple, les emballages auront été thermoformés à partir d'un film de polymère thermoformable étanche à la lumière, l'humidité et l'oxygène, par exemple en chlorure de polyvinyle ou polystyrène préalablement plongé dans un bain de peroxyde d'hydrogène et séché à l'air chaud. De même une fois remplis, les emballages seront fermés hermétiquement, par exemple au moyen de couvercles formés dans des feuilles d'aluminium recouvertes de laque thermoscellable stérilisées comme ci-dessus, puis thermoscellés. De préférence, le conditionnement proprement dit se fera dans une enceinte sous légère surpression d'air stérile par rapport à la pression atmosphérique.

On introduit la présure stérile dans les emballages pendant ou de préférence avant le remplissage du produit, à partir d'un réservoir stérile, dont la température est de préférence la température ambiante. L'enzyme peut être d'origine animale ou de préférence microbienne et se présenter sous forme d'une solution appropriée pouvant être stérilisée par microfiltration, par exemple par passage à travers un filtre retenant les particules de dimensions supérieures à 0,22 μm, et diluée à la force voulue, par exemple au 1/200ème. La quantité ajoutée sera de préférence de 1 - 3 % en poids du mélange.

**Coagulation**

La coagulation consiste à maintenir le produit emballé dans des conditions permettant une action optimum de la présure. Elle peut être pratiquée en transférant les emballages dans un local à température de 30 - 40°C et en les maintenant pendant 1 à 3 h à cette température. De préférence, ce transfert ne sera pas différé au-delà d'environ 15 min après le remplissage, de manière à éviter la coagulation en mouvement qui aurait une influence négative sur la texture du produit fini.

On peut agrémenter les produits obtenus en ajoutant, de préférence après le traitement de stérilisation au moment du conditionnement et de manière stérile, de préférence après l'addition de la présure et du produit intermédiaire stérilisé, des additifs et/ou des ingrédients, par exemple des colorants et arômes alimentaires, des épices, par exemple des herbes, des morceaux de fruits, du sucre, des confitures ou du miel. Bien entendu, ces additifs doivent pouvoir être stérilisés. Ils doivent être présents en quantité telle qu'ils n'inhibent pas l'action de la présure ou encore, de préférence, leur poids spécifique doit être tel qu'ils forment une couche séparée comme par exemple dans le cas du miel qui va au fond des emballages.

De couleur blanche franche et de saveur lactée délicate, de caractéristiques semblables à la Ricotta, les produits du genre fromage obtenus selon le procédé de l'invention peuvent être consommés tels quels comme dessert ou snack ou utilisés comme ingrédients de desserts ou de sauces. Pour autant qu'ils soient gardés dans leur emballage non ouvert, ils se conservent 3 - 4 semaines à 10 - 15°C ou 6 - 8 semaines à 4 - 6°C, ce qui est remarquable pour des produits frais. Ils ont une excellente valeur nutritive par leur teneur élevée en protéines hautement digestibles et en calcium assimilable. Ils sont particulièrement adaptés aux besoins des enfants et adolescents en croissance ainsi que des personnes âgées et malades hospitalisés.

Les exemples suivants illustrent la mise en oeuvre du procédé selon l'invention. Dans ces exemples, les parties et pourcentages sont exprimés en valeurs pondérales sauf indication contraire.

**Exemple 1**

1. On pasteurise du lait entier à 72°C pendant 15 - 20 s. et on l'écrème jusqu'à obtenir une crème à 50 % de matière grasse. On envoie le lait écrémé dans un module d'ultrafiltration et on le concentre environ 4 fois à la température de 50°C jusqu'à obtenir 13,5 % de protéines dans le rétentat. On pasteurise alors le rétentat à 65°C pendant 1 min, on le refroidit puis on l'entrepose en cuve à 4°C. Celui-ci a un pH de 6,65 - 6,70.

2. La crème à 50 % de matières grasses est pasteurisée puis refroidie et entreposée en cuve à 4°C. Son pH est 6,7.

3. On prépare de la Ricotta de manière conventionnelle et on opère pour obtenir un produit à 30 % de matières sèches et à 60 % de matières grasses/matières sèches avec un pH de 6,2. On refroidit le produit et on l'entrepose à 4°C.

On disperse 15 parties de Ricotta (3) dans 15 parties de rétentat (1) par mélange dans un pétrin sous agitation puis par passage dans un moulin colloïdal. On ajoute à la dispersion le reste du rétentat (1), soit 66 parties et 4 parties de crème (2), on préchauffe le mélange à 50°C et on l'homogénéise à $2,45 \cdot 10^6$Pa.

On dirige le mélange homogénéisé vers une ligne constituée de deux échangeurs de chaleur à surface raclée en série reliés à une cuve tampon à double manteau reliée elle-même à un groupe de doseurs aseptiques situé dans l'enceinte de la machine de remplissage. L'ensemble de ces éléments est soigneusement stérilisé par la vapeur à 120°C pendant vingt minutes. Un premier échangeur à surface raclée porte le mélange de 50°C à 135°C et un second le refroidit de 135°C à 50°C, avec un temps d'attente entre les deux de 8 s. Une fois stérilisé, le mélange est entreposé dans la cuve tampon stérile maintenue à 50°C.

De la pressure microbienne en poudre est dissoute dans la quantité d'eau déminéralisée permettant d'ajuster sa force à 1/200. On la préfiltre et on la filtre ensuite stérilement par passage à travers un filtre stérilisant (diamètre maximum des pores 0,22 μm). La solution stérile est ensuite dirigée vers un groupe de doseurs aseptiques de la machine de remplissage au moyen d'air stérile. Bien entendu, les éléments situés en aval du filtre stérilisant auront été stérilisés au préalable.

A l'aide d'une machine de conditionnement hautement hygiénique comprenant successivement:

une station de thermoformage réalisant des pots de 125 ml à partir d'une feuille de PVC (chlorure de polyvinyle) ayant été préalablement plongée dans une solution de peroxyde d'hydrogène et séchée à l'air chaud,
- un groupe de doseurs aseptiques pour la solution de présure stérile,
- un groupe de doseurs aseptiques pour le mélange stérilisé,
- une station de thermoscellage d'une feuille d'aluminium laquée ayant été préalablement trempée dans une solution de peroxyde d'hydrogène et séchée à l'air chaud,
- une station de découpe des pots de produit conditionné.

L'enceinte de la machine étant sous légère surpression d'air stérile par rapport à la pression atmosphérique, on dose dans les pots 2 ml de la solution de présure stérile, puis on les remplit de mélange stérilisé (les liquides sont transférés à l'aide d'air comprimé stérile) et on thermoscelle les couvercles.

On transfère ensuite les pots dans un local où ils reposent 2 h à 35°C. La phase de coagulation terminée, on les refroidit à 4°C. Ils sont alors prêts à être commercialisés.

Le produit fini a la composition suivante:

| | % | |
|---|---|---|
| Humidité | 78,5 | ±0,5 |
| Matières sèches totales | 21,5 | ±0,5 |
| dont matières grasses | 4,50 | ±0,25 |
| protéines totales | 11,75 | ±0,25 |
| lactose | 3,9 | ±0,1 |
| cendres | 1,35 | ±0,05 |

### Exemple 2

On procède comme à l'exemple 1, sauf qu'on réalise le mélange de départ en dispersant 2 parties de Ricotta (3) dans 2 parties de rétentat (1) et en mélangeant la dispersion obtenue avec 67 parties de rétentat (1) et 29 parties de crème (2).

Le produit fini a la composition suivante:

| | % | |
|---|---|---|
| Humidité | 69 | ±1 |
| Matières sèches totales | 31 | ±1 |
| dont matières grasses | 16 | ±0,5 |
| protéines totales | 10 | ±0,25 |
| lactose | 3,7 | ±0,1 |
| cendres | 1,3 | ±0,1 |

### Exemple 3

On procède comme à l'exemple 1, sauf qu'on stérilise le mélange dispersé par la vapeur dans une installation UHT à 140°C pendant 25 s.

Après coagulation, le produit fini a une texture plus onctueuse (moins ferme mais plus lisse) que celui obtenu selon l'exemple 1.

### Exemple 4

On procède comme à l'exemple 3 à partir du mélange de départ de l'exemple 2.

Après coagulation, le produit fini a une texture plus onctueuse (moins ferme mais plus lisse) que celui obtenu selon l'exemple 2.

### Exemple 5

On procède comme aux exemples 1 à 4 mais on ajoute un hydrocolloïde protecteur au mélange de départ sous forme de 0,2 %, par rapport au poids du mélange, d'alginate de Na ou de Carraghénate.

Après coagulation, les produits finis ont une texture plus ferme et présentent une exudation mineure de sérum pendant la commercialisation.

### Revendications

1. Procédé de fabrication d'un produit laitier du genre fromage frais dans lequel on prépare un mélange de départ contenant de la caséine à l'état natif, des matières grasses et des protéines de petit-lait, on stérilise ce mélange et on le conditionne à chaud et de manière hautement hygiénique dans des récipients, on y ajoute un agent de fermentation, on ferme les récipients hermétiquement et on les laisse reposer dans des conditions permettant la coagulation de la caséine sous l'action de l'agent de fermentation, caractérisé par le fait que la caséine à l'état natif est sous forme d'un rétentat d'ultrafiltration de lait plus ou moins écrémé de pH voisin du pH naturel du lait, les protéines de petit-lait sous forme de Ricotta de pH 6,1 - 6,2 et les matières grasses sous forme de crème de pH 6,6 - 6,7 et que l'agent de fermentation est uniquement la présure stérile à l'exclusion des ferments lactiques d'origine bactérienne et de la présure non stérile.

2. Procédé selon la revendication 1, caractérisé par le fait que le mélange de départ contient, en poids, 65 à 85 % de rétentat à 12 - 15 % de matières sèches obtenu par ultrafiltration de lait maigre, 3 à 15 % de Ricotta à environ 30 % de matières sèches et 4 à 30 % de crème à environ 50 % de matières grasses.

3. Procédé selon la revendication 2, caractérisé par le fait que le mélange est préparé par dispersion de la Ricotta dans une quantité sensiblement égale de rétentat, addition du reste du rétentat et de la crème et homogénéisation de l'ensemble à une pression inférieure à environ 4,9 · 10⁶Pa.

4. Procédé selon la revendication 1, caractérisé par le fait qu'on stérilise le mélange de départ à 130 - 145°C pendant 8 à 60 s.

5. Procédé selon la revendication 1, caractérisé par le fait que le conditionnement est effectué dans une enceinte sous légère surpression d'air stérile par rapport à la pression atmosphérique et à une température de 45 - 55°C.

6. Procédé selon la revendication 1, caractérisé par le fait qu'on laisse les emballages remplis et fermés au repos pendant 1 à 3 h à 30 - 40°C.

7. Procédé selon la revendication 1, caractérisé par le fait qu'on ajoute au produit au moment du conditionnement et de manière stérile des additifs et/ou des ingrédients tels que des colorants et arômes alimentaires, des épices, des morceaux de fruits, du sucre, des confitures ou du miel.

8. Procédé selon la revendication 1, caractérisé par le fait que le mélange contient un agent stabilisant a raison de 0,1 à 0,3 % en poids.

9. Produit laitier du genre fromage frais obtenu par la mise en oeuvre du procédé selon l'une des revendications 1 à 8.

## Patentansprüche

1. Verfahren zur Herstellung eines Milchproduktes von der Art eines Frischkäses, bei welchem man ein Ausgangsgemisch herstellt, welches Casein im Naturzustand, Fette und Molkenproteine enthält, dieses Gemisch sterilisiert, dasselbe unter Wärmeeinwirkung und auf eine hochgradig hygienische Art und Weise in Behältern konditioniert, diesem Gemisch, einen Gärungserreger zusetzt, die Behälter hermetisch verschließt und dieselben unter Bedingungen rasten läßt, welche das Gerinnen des Caseins unter der Einwirkung des Gärungserregers ermöglichen, darch gekennzeichnet, daß das Casein im Naturzustand in der Form eines Ultrafiltrationsretentates aus mehr oder weniger entrahmter Milch vorliegt, dessen pH-Wert in der Nähe des natürlichen pH-Wertes der Milch liegt, daß die Molkenproteine in der Form von Ricotta mit einem pH-Wert von 6,1 bis 6,2 vorliegen, daß die Fette in der Form von Rahm mit einem pH-Wert von 6,6 bis 6,7 vorliegen, und daß der Gärungsserreger einzig und allein aus sterilem Labferment, unter Ausschluß von Milchsäuregärungserregern bakteriellen Ursprungs und von nicht sterilem Labferment, besteht.

2. Verfahren nach Anspruch 1, dadurch gekennzeichnet, daß das Ausgangsgemisch, auf Gewichtsbasis bezogen, 65 bis 85 % Retentat mit einem Gehalt an Trockensubstanz von 12 bis 15 %, welches Rententat durch Ultrafiltration von Magermilch erhalten worden ist, 3 bis 15 % Ricotta mit einem Gehalt an Trockensubstanz von etwa 30 %, und 4 bis 30 % Rahm mit einem Fettgehalt von etwa 50 % enthält.

3. Verfahren nach Anspruch 2, dadurch gekennzeichnet, daß das Gemisch durch Dispergieren des Ricotta in einer im wesentlichen gleichen Menge an Retentat, Zugabe des restlichen Retentates und des Rahms und Homogenisieren des Ganzen bei einem unter etwa 4,9 · 10⁶Pa liegenden Druck hergestellt wird.

4. Verfahren nach Anspruch 1, dadurch gekennzeichnet, daß man das Ausgangsgemisch bei 130 bis 145°C während 8 bis 60 s sterilisiert.

5. Verfahren nach Anspruch 1, dadurch gekennzeichnet, daß das Konditionieren in einem Raum unter leichtem Überdruck von steriler Luft in bezug auf den Atmosphärendruck und bei einer Temperatur von 45 bis 55°C durchgeführt wird.

6. Verfahren nach Anspruch 1, dadurch gekennzeichnet, daß man die gefüllten und verschlossenen Verpackungen während 1 bis 3 h bei 30 bis 40°C rasten läßt.

7. Verfahren nach Anspruch 1, dadurch gekennzeichnet, daß man dem Produkt zum Zeitpunkt des Konditionierens und auf sterile Art und Weise Zusätze und/oder Bestandteile, wie Färbemittel und Aromastoffe für Nahrungsmittel, Gewürze, Fruchtstückchen, Zucker, Konfitüren oder Honig, zusetzt.

8. Verfahren nach Anspruch 1, dadurch gekennzeichnet, daß das Gemisch ein Stabilisierungsmittel in einer Menge von 0,1 bis 0,3 Gew.-% enthält.

9. Milchprodukt von der Art eines Frischkäses, welches durch Anwendung des Verfahrens nach einem der Ansprüche 1 bis 8 erhalten worden ist.

## Claims

1. A process for the production of a dairy product of the soft cheese type in which a starting mixture containing casein in the native state, fats and whey proteins is prepared, sterilized and packed hot under highly hygienic conditions in containers, a fermenting agent is added, the containers are hermetically sealed and are left standing under conditions which allow the casein to coagulate under the effect of the fermenting agent, characterized in that the casein in the native state is in the form of an ultrafiltration retentate of more or less skimmed milk similar in pH to the natural pH of milk, the whey proteins are in the form of Ricotta having a pH of 6.1 - 6.2 and the fats are in the form of cream having a pH of 6.6 - 6.7 and in that the fermenting agent is solely sterile rennet except for lactic ferments of bacterial origin and non-sterile rennet.

2. A process as claimed in claim 1, characterized in that the starting mixture contains 65 to 68 % by weight of retentate having a dry matter content of 12 to 15 % obtained by ultrafiltration of skimmed milk, 3 to 15 % by weight of Ricotta having a dry matter content of 30 % and 4 to 30 % by weight of cream containing approximately 50 % fats.

3. A process as claimed in claim 2, characterized in that the mixture is prepared by dispersing Ricotta in a substantially equal quantity of retentate, adding the rest of the retentate and cream and homogenizing the whole at a pressure below about $4.9 \cdot 10^6$ Pa.

4. A process as claimed in claim 1, characterized in that the starting mixture is sterilized for 8 to 60 s at 130 - 145°C.

5. A process as claimed in claims 1, characterized in that packing is carried out in a chamber under a slight excess pressure of sterile air in relation to atmospheric pressure and at a temperature of 45 to 55°C.

6. A process as claimed in claim 1, characterized in that, after filling and sealing, the packs are left standing for 1 to 3 h at 30 - 40°C.

7. A process as claimed in claim 1, characterized in that additives and ingredients, such as food colorants and flavorings, spices, pieces of fruit, sugar, jam or honey, are added to the product during packing under sterile conditions.

8. A process as claimed in claim 1, characterized in that the mixture contains a stabilizer in a quantity of 0.1 to 0.3 % by weight.

9. A dairy product of the soft cheese type obtained by the process claimed in any of claims 1 to 8.